# EUROPÄISCHE PATENTSCHRIFT

(11) **EP 0 775 167 B1**
(45) Veröffentlichungstag und Bekanntmachung des Hinweises auf die Patenterteilung: **21.04.1999**
(21) Anmeldenummer: 95927741.9
(22) Anmeldetag: 28.07.1995
(51) Int. Cl.: C08G 69/10, C08G 73/06, C11D 3/37, C02F 5/12

(54) **VERFAHREN ZUR HERSTELLUNG VON POLYASPARAGINSÄURE**
METHOD FOR PRODUCING POLYASPARTIC ACID
PROCEDE DE FABRICATION D'ACIDE POLYASPARTIQUE

(30) Priorität: 12.08.1994 DE 4428639
(43) Veröffentlichungstag der Anmeldung: 28.05.1997
(73) Patentinhaber: BASF AKTIENGESELLSCHAFT, 67056 Ludwigshafen (DE)
(72) Erfinder: KRONER, Matthias, D-67304 Eisenberg (DE); SCHORNICK, Gunnar, D-67271 Neuleiningen (DE); FEINDT, Hans-Jacob, D-67069 Ludwigshafen (DE); MEYER, Thomas, D-67354 Römerberg (DE); LUDWIG, Alfons, D-37671 Höxter (DE); METZMANN, Udo, D-67283 Obrigheim (DE)
(86) Internationale Anmeldenummer: EP9503003
(87) Internationale Veröffentlichungsnummer: WO9605241

(56) Entgegenhaltungen:
- EP-A- 0 646 615
- EP-A- 0 659 875
- WO-A-92/14753
- GB-A- 2 246 786
- US-A- 5 219 986

## Beschreibung

Die Erfindung betrifft ein Verfahren zur Herstellung von Polyasparaginsäure durch Polykondensation von feinteiliger Asparaginsäure bei Temperaturen oberhalb von 150°C in Gegenwart von Säuren als Katalysator.

Die Verwendung von Phosphorsäure als Katalysator bei der Polykondensation von Asparaginsäure ist bekannt, vgl. Journal of Medicinal Chemistry, Vol. 16, 893 (1973) und DE-A-4 023 463 entsprechend dem GB-A-2 246 786. Die Polykondensationstemperatur beträgt mindestens 120°C und liegt in den meisten Fällen in dem Bereich von 140 bis 250, vorzugsweise 160 bis 240°C. Aus der US-A-5 219 986 ist ein Verfahren zur thermischen Polykondensation von Asparaginsäure in der Wirbelschicht unter vermindertem Druck bekannt.

Aus der US-A-5 221 733 ist ein Verfahren zur Herstellung von Polysuccinimid bekannt, bei dem man pulverförmige L-Asparaginsäure in einem Rotationsverdampfer zunächst rasch auf eine Temperatur von etwa 188°C erhitzt und danach die Temperatur des Reaktionsgemisches rasch auf eine Temperatur von mindestens 227°C erhöht und bei dieser Temperatur solange kondensiert, bis der Umsatz mindestens 80 % beträgt. Durch Hydrolyse des so erhältlichen Polysuccinimids mit Basen werden Salze der Polyasparaginsäure hergestellt.

Bei der Polykondensation feinteiliger Asparaginsäure in Gegenwart von Säuren, wie Phosphorsäure, besteht ein Problem darin, daß die als Katalysator wirkende Phosphorsäure vor der Polykondensation möglichst gleichmäßig auf den Asparaginsäurekristallen verteilt werden muß. Wenn Phosphorsäure in Mengen von etwa 5 bis 20 Gew.-%, bezogen auf Asparaginsäure, eingesetzt wird, entstehen während der Polykondensation auf den Asparaginsäurekristallen klebrige Phasen. Dadurch treten Agglomerationen von Asparaginsäurekristallen auf, so daß das polymerisierende Gemisch praktisch nicht mehr gerührt werden kann.

Der vorliegenden Erfindung liegt die Aufgabe zugrunde, ein Verfahren zur Herstellung von feinteiliger Polyasparaginsäure durch Polykondensation von pulverförmiger Asparaginsäure in Gegenwart von sauren Katalysatoren zur Verfügung zu stellen, bei dem praktisch keine oder höchstens eine geringfügige Agglomeration von Polymerteilchen eintritt.

Die Aufgabe wird erfindungsgemäß gelöst mit einem Verfahren zur Herstellung von Polyasparaginsäure durch Polykondensation von feinteiliger Asparaginsäure, die einen mittleren Teilchendurchmesser von 5 µm bis 5 mm hat, bei Temperaturen oberhalb von 150°C in Gegenwart von sauren Katalysatoren mit Ausnahme von Chlorwasserstoff und Kohlendioxid, wenn man die sauren Katalysatoren erst in der Reaktionszone, in der die Polykondensation abläuft, mit der feinteiligen Asparaginsäure in Kontakt bringt.

Als Asparaginsäure kann man L-, DL- oder D-Asparaginsäure sowie Mischungen der genannten Asparaginsäuren einsetzen. Asparaginsäure kann beispielsweise durch thermische Addition von Ammoniak an Maleinsäure, durch enzymatisch katalysierte Anlagerung von Ammoniak an Fumarsäure oder durch Fermentation von Glucose und Ammoniumsalzen mit Hilfe von Mikroorganismen hergestellt werden. Die Kristallgröße und die Art der Herstellung der Asparaginsäure haben keinen Einfluß auf die Polykondensation. Die zur Polykondensation eingesetzte feinteilige Asparaginsäure kann beispielsweise mittlere Teilchendurchmesser von 5 µm bis 5 mm, vorzugsweise 50 µm bis 400 µm haben.

Die Polykondensation der feinteiligen Asparaginsäure erfolgt bei Temperaturen oberhalb von 150°C, vorzugsweise bei 160 bis 200°C.

Als saure Katalysatoren kommen anorganische und organische Säuren sowie sauer reagierende Verbindungen in Betracht. Beispiele für Säuren sind:

| | |
|---|---|
| Benzolsulfonsäure | pKs = 0,70 |
| Naphthalinsulfonsäure | PKs = 0,57 |
| | |
| ortho-Phosphorsäure | pKs1 = 2,12 |
| Pyrophosphorsäure | pKs1 = 0,85 |
| Pyrophosphorsäure | pKs2 = 1,49 |
| phosphorige Säure | pKs1 = 2,00 |
| Schwefelsäure | pKs2 = 1,92 |
| Schwefelsäure | pKs1 unter 0,7 |
| | |
| schweflige Säure | pKs1 = 1,81 |
| Dichloressigsäure | pKs1 = 1,48 |
| Bromessigsäure | pKs1 = 2,69 |
| Chloressigsäure | pKs1 = 2,85 |
| Chlorpropionsäure | pKs = 2,83 |
| Cyanessigsäure | pKs = 2,45 |
| Dichloressigsäure | pKs = 1,48 |
| Dihydroxyäpfelsäure | pKs1 = 1,92 |
| Dihydroxyweinsäure | pKs1 = 1,92 |
| Maleinsäure | pKs1 = 1,83 |
| Oxalsäure | pKs1 = 1,23 |
| Trihydroxybenzoesäure | pKs1 = 1,68 |

Vorzugsweise verwendet man als Katalysator Phosphorsäure, phosphorige Säure, unterphosphorige Säure und partiell neutralisierte Schwefelsäure, wie Ammoniumhydrogensulfat, Natriumhydrogensulfat und Kaliumhydrogensulfat, Mischungen von Natrium- und Kaliumhydrogensulfat, niedrig schmelzende Mischungen aus Ammonium-, Natrium- und Kaliumhydrogensulfat, Trimethylammoniumhydrogensulfat, Triethylammoniumhydrogensulfat und Mischungen der genannten Hydrogensulfate sowie Schwefelsäure. Wie aus der oben angegebenen Zusammenstellung von Säuren hervorgeht, liegen die pKs-Werte der Säuren mit Ausnahme von Schwefelsäure in dem Bereich von 0,7 bis 3,0. Die sauren Katalysatoren werden vorzugsweise in einer solchen Menge eingesetzt, daß das Gewichtsverhältnis von Asparaginsäure zu sauren Katalysatoren 1:0,02 bis 1:0,25 beträgt. Während man für eine vollständige Polykondensation von Asparaginsäure in Abwesenheit von sauren Katalysatoren bei einer Temperatur von 200°C etwa 50 Stunden benötigt, erhält man bei der Polykondensation von Asparaginsäure in Gegenwart von sauren Katalysatoren bereits nach einem Zeitraum von 5 Minuten bis 5 Stunden einen vollständigen Umsatz.

Bei dem erfindungsgemäßen Verfahren wird eine feinteilige Asparaginsäure eingesetzt und zu feinteiligem Polysuccinimid kondensiert, aus dem dann durch Hydrolyse Polyasparaginsäure bzw. durch Neutralisation mit Basen die Salze der Polyasparaginsäure hergestellt werden. Der Vorteil des erfindungsgemäßen Verfahrens gegenüber den bekannten Verfahren der Polykondensation von Asparaginsäure in Gegenwart von sauren Katalysatoren liegt darin, daß bei dem erfindungsgemäßen Verfahren die Ausbildung von klebrigen Phasen auf den Asparaginsäurekristallen vermieden wird, so daß es nicht zu einem Verbacken der feinteiligen Asparaginsäure während der Polykondensation kommt. Das erfindungsgemäße Verfahren kann batchweise oder kontinuierlich durchgeführt werden. Die Polykondensation der pulverförmigen Asparaginsäure kann in einer Wirbelschicht oder in einem bewegten Festbett vorgenommen werden. Geeignete Apparaturen für die Durchführung des erfindungsgemäßen Verfahrens sind alle Vorrichtungen, die für die Feststoffdurchmischung üblicherweise in Betracht kommen und die einen Wärmeeintrag ermöglichen, beispielsweise mit Düsen versehene Mischer und Kneter, die verschieden konfigurierte Mischarme und Knethaken besitzen, sowie Drehrohröfen und Wirbelbettreaktoren. Bei einer kontinuierlichen Herstellung von Polysuccinimid kann man die Polykondensation der Asparaginsäure beispielsweise in einer Wirbelrinne durchführen. Die Wirbelrinne kann verschiedene Zonen aufweisen, z.B. eine Zone, in der Asparaginsäure mit dem sauren Katalysator in Kontakt gebracht wird, z.B. durch Besprühen und eine andere Zone, in der die Polykondensation gegebenenfalls bei einer höheren Temperatur als. das Kontaktieren mit den Säuren erfolgt.

In einer bevorzugten Ausführungsform des erfindungsgemäßen Verfahrens wird pulverförmige Asparaginsäure in einer Wirbelschicht auf eine Temperatur von mindestens 150, vorzugsweise 160 bis 200°C erhitzt und mit einem sauren Katalysator in Kontakt gebracht. Dies kann dadurch geschehen, daß man den sauren Katalysator, gegebenenfalls gelöst in einem Lösemittel, auf das Pulverbett aufbringt, in dem man ihn beispielsweise zutropft, in einem oder in mehreren dünnen Strahlen zudosiert oder auf die Oberfläche oder direkt in das Wirbelbett sprüht oder eindüst. Die feinteilige Asparaginsäure wird dadurch mit den sauren Katalysatoren imprägniert. An den imprägnierten Stellen der Asparaginsäure wird die Polykondensation ausgelöst und das dabei entstehende Kondensationswasser aus dem System entfernt. Auf der Oberfläche der Asparaginsäurekristalle entsteht eine Lösung von Polyasparaginsäureimid in den als Katalysator eingesetzten Säuren, weil die Säuren sowohl für Asparaginsäure als auch für Polyasparaginsäureimid gute Lösemittel sind. Aufgrund des Konzentrationsgradienten zwischen der Oberfläche und dem Inneren der Kristalle der Asparaginsäure diffundiert die Säure in das Kristallinnere und löst dort die Polykondensation aus. Die Kristalloberfläche verarmt dadurch an saurem Katalysator, so daß dort sehr konzentrierte Lösungen an Polysuccinimid im Katalysator vorherrschen. Solche hochkonzentrierten Lösungen kleben jedoch nicht mehr, so daß die einzelnen Asparaginsäureteilchen nicht miteinander verbacken. Die sauren Katalysatoren, die von der Oberfläche der Asparaginsäurekristalle in das Innere diffundiert sind, werden im Verlauf der Polykondensation durch erneut aufgebrachte saure Katalysatoren ersetzt. Vorzugsweise sprüht man die sauren Katalysatoren in einem solchen Maße auf die Oberfläche der feinteiligen Asparaginsäure auf, daß darauf keine klebrigen Lösungen entstehen. Für die praktische Durchführung des Verfahrens bedeutet dies, daß man die als Katalysator wirkenden sauren Substanzen höchstens in einer solchen Menge auf die Oberfläche der feinteiligen Asparaginsäure aufbringt, daß die Menge an zugeführter Säure der Säuremenge entspricht, die in die feinteilige Asparaginsäure diffundiert. Dadurch wird ein Verkleben der Teilchen verhindert, so daß die Reaktionsmischung während der gesamten Polykondensationsreaktion immer in Form eines rieselfähigen, rührbaren und klebfreien Pulvers vorliegt.

Eine technisch besonders einfache Ausführungsform des erfindungsgemäßen Verfahrens besteht darin, daß man feinteilige Asparaginsäure in einem Schaufeltrockner oder in einer Wirbelschicht auf eine Temperatur von mindestens 150°C erhitzt und die erforderliche Menge an katalytisch wirkenden Säuren im Verlauf der Polykondensation aufsprüht. Die Polykondensationsdauer beträgt beispielsweise 1 Minute bis 10 Stunden. Bei einer Polykondensation in einer Wirbelschicht kann die Reaktionsmasse gegebenenfalls zusätzlich noch gerührt werden. Als Wirbelgas kann man inerte Gase, wie Stickstoff oder Luft verwenden. Das Wirbelgas kann im Kreis gefahren werden, wobei sich der Anteil an Wasserdampf, der bei der Polykondensation gebildet wird, bis zur Sättigung erhöhen kann, so daß das Kreisgas auch aus reinem Wasserdampf bestehen kann.

Um im Reaktorinneren Energieverluste zu vermeiden, kann man die sauren Katalysatoren auf eine Temperatur erhitzen, bei der die Polykondensation der Asparaginsäure durchgeführt wird. Beispielsweise kann man eine 10 bis 80 %ige Phosphorsäure in einem druckdicht verschlossenen Behälter auf eine Temperatur von mindestens 150°C erhitzen und die wäßrige Säure über eine Düse in den Reaktor sprühen. Dadurch wird die zur Verdampfung des Verdünnungswasser benötigte Energie nicht mehr der Polykondensationszone entzogen.

Die Polykondensate fallen in feinteiliger Form an. Der Teilchendurchmesser der nach dem erfindungsgemäßen Verfahren erhältlichen Polykondensate beträgt z.B. 10 µm bis 10 mm, vorzugsweise 30 µm bis 5 mm. Sofern in untergeordnetem Maße Agglomerate anfallen, so können sie leicht auf die gewünschte Korngröße gemahlen werden. Die Polykondensate bestehen im allgemeinen aus Polyasparaginsäuren, Polysuccinimiden oder Mischungen der beiden genannten Polykondensate. Daraus kann man durch Hydrolyse mit Basen die entsprechenden Salze der Polyasparaginsäure herstellen. Als Base eignen sich Alkalimetall- und Erdalkalimetallbasen sowie Ammoniak und Amine. So erhält man beispielsweise durch Zugabe von Natronlauge oder Soda zu einer wäßrigen Aufschlämmung von pulverförmigen Polysuccinimiden wäßrige Polynatriumaspartatlösungen. Die Molgewichte M_{w} der Polyasparaginsäuren betragen 800 bis 100 000. Die nach dem erfindungsgemäßen Verfahren hergestellten Polykondensate enthalten weniger als 15, vorzugsweise weniger als 10 mol-% biologisch nicht abbaubare polymere Verunreinigungen.

Die Polyasparaginsäuren und ihre Salze werden beispielsweise in phosphatfreien oder phosphatreduzierten Wasch- und Reinigungsmitteln eingesetzt, die mindestens ein Tensid und gegebenenfalls sonstige übliche Bestandteile enthalten. Der Phosphorgehalt von phosphatreduzierten Waschmitteln beträgt höchstens 25 Gew.-%, berechnet als Na-triphosphat. Die Waschmittel enthalten vorzugsweise solche Tenside, die vollständig biologisch abbaubar sind. Die Menge an Polyasparaginsäure oder ihren Salzen in den Wasch- und Reinigungsmitteln beträgt z.B. 1 bis 10 Gew.-%.

Die Waschmittel können pulverförmig sein oder auch in flüssiger Einstellung vorliegen. Die Zusammensetzung der Wasch- und Reinigungsmittelformulierungen kann sehr unterschiedlich sein. Wasch-> und Reinigungsmittelformulierungen enthalten üblicherweise 2 bis 50 Gew.-% Tenside und gegebenenfalls Builder. Diese Angaben gelten sowohl für flüssige als auch für pulverförmige Waschmittel. Wasch- und Reinigungsmittelformulierungen, die in Europa, in den USA und in Japan gebräuchlich sind, findet man beispielsweise in Chemical und Engn. News, Band 67, 35 (1989) tabellarisch dargestellt. Weitere Angaben über die Zusammensetzung von Wasch- und Reinigungsmitteln können Ullmanns Encyklopädie der technischen Chemie, Verlag Chemie, Weinheim 1983, 4. Auflage, Seiten 63-160, entnommen werden. Die Waschmittel können gegebenenfalls noch ein Bleichmittel enthalten, z.B. Natriumperborat, das im Fall seines Einsatzes in Mengen bis zu 30 Gew.-% in der Waschmittelformulierung enthalten sein kann. Die Wasch- und Reinigungsmittel können gegebenenfalls weitere übliche Zusätze enthalten, z.B. Komplexbildner, Trübungsmittel, optische Aufheller, Enzyme, Parfümöle, Farbübertragungsinhibitoren, Vergrauungsinhibitoren und/oder Bleichaktivatoren.

Die Prozentangaben in den Beispielen bedeuten Gewichtsprozent.

### Beispiel 1

In einem mit einem Rührer versehenen Wirbelbettreaktor werden 2 kg Asparaginsäure (Teilchengröße 0,1 bis 1 mm) eingefüllt und unter Rühren und Durchleiten von 2000 l Stickstoff pro Stunde am Wirbeln gehalten. Das Wirbelgas besitzt eine Temperatur von 185°C. Der Wirbelschichtreaktor hat einen Durchmesser von 10 cm und eine Höhe von 80 cm. Die Höhe der aufgewirbelten Asparaginsäurekristalle beträgt 30 cm. Die Reaktorwand und der Reaktorboden werden geheizt, so daß die Asparaginsäurekristalle eine Temperatur von 180 bis 185°C haben. Sobald das Wirbelgut diese Temperatur erreicht hat, werden über eine seitlich angeordnete Zweistoffdüse gleichzeitig 1 l einer auf 90°C vorgeheizten 10 %igen wäßrigen Phosphorsäure innerhalb von 4 Stunden sowie zum Versprühen der wäßrigen Phosphorsäure 1600 l Stickstoff pro Stunde in das Wirbelgut eingesprüht. Das verdampfte Wasser wird am Reaktorkopf zusammen mit dem Wirbelgas entfernt. Am Reaktorkopf befinden sich 4 keramische Filterkerzen, die mit Hilfe eines Gasjets periodisch gereinigt werden. Nach Beendigung der Säurezugabe liegt ein Wirbelgut vor, daß nur geringfügige Agglomerationen bis zu einer Teilchengröße von 3 mm besitzt und gut gewirbelt werden kann. Die mittlere Größe des Wirbelguts beträgt 100 µm bis 1 mm. An der Reaktorwand treten keine Verbackungen auf. Nach Beendigung der Säurezugabe wird das Reaktionsgemisch noch 2 Stunden bei 180 bis 185°C gewirbelt und anschließend abgekühlt. Das Polykondensat wird dann mit 4 l Wasser gewaschen, getrocknet und durch Zugabe von 25 %iger wäßriger Natronlauge in das Natriumsalz der Polyasparaginsäure überführt. Das Molgewicht M_{w} beträgt 10 000. Die Bestimmung des Molekulargewichts erfolgte mit Hilfe der Gelpermeationschromatographie an geeichten Polyacrylsäurestandards.

### Beispiel 2

In die im Beispiel 1 beschriebene Apparatur werden 1 kg Asparaginsäure (Teilchengröße 0,1 mm) eingefüllt, erhitzt und bei einer Temperatur von 185°C innerhalb von 2 Stunden mit 500 ml einer 20 %igen wäßrigen Phosphorsäurelösung besprüht. Nach Beendigung der Phosphorsäurezugabe wird das Reaktionsgemisch noch 2 Stunden bei 185°C gewirbelt und anschließend abgekühlt. Man erhält Polysuccinimid mit einer mittleren Teilchengröße von 0,1 bis 1 mm.

Das Polysuccinimid wird mit Wasser gewaschen um Phosphorsäure zu entfernen und anschließend durch Zugabe von 25 %iger wäßriger Natronlauge in das Natriumsalz der Polyasparaginsäure überführt. Das Molgewicht M_{w} der Polyasparaginsäure beträgt 15 000.

### Beispiel 3

In einem Schaufeltrockner mit wandgängigen Becken-Schaufeln und einem Reaktorvolumen von 5 l werden 2 kg Asparaginsäure (Teilchendurchmesser 0,1 bis 1 mm) eingefüllt und bei Rührerdrehzahlen von 50 - 100 U/min auf eine Temperatur von 190°C aufgeheizt. Die Reaktorwandtemperatur beträgt 220°C. Der Reaktor wird bei einem Vakuum von 60 - 70 mbar betrieben.

Sobald die Asparaginsäurekristalle die Reaktionstemperatur von 190°C erreicht haben, werden über eine Einstoffdüse 267 g einer 75 %igen wäßrigen Phosphorsäurelösung über einen Zeitraum von 30 min zugedüst. Man erhält ein gleichmäßig imprägniertes Produkt, das nur geringfügig Agglomerate aufweist.

Das verdampfte Wasser wird über einen Brüdenaustritt abgezogen. Während der Säurezugabe besitzt die Reaktionsmischung eine Temperatur zwischen 180 und 200°C. Nach abgeschlossener Säurezugabe wird weitere 2 Stunden polykondensiert, wobei die Temperatur der Reaktionsmischung gegen Ende der Reaktion auf bis zu 210°C ansteigt.

Man erhält ein sehr feines, gut rieselfähiges Produkt. An der Reaktorinnenwand sind keine Verbackungen festzustellen. Nach der Hydrolyse mittels Natronlauge erhält man eine Polyasparaginsäure mit Molgewicht M_{w} von 9000.

## Patentansprüche

1. Verfahren zur Herstellung von Polyasparaginsäure durch Polykondensation von feinteiliger Asparaginsäure, die einen mittleren Teilchendurchmesser von 5 µm bis 5 mm hat, bei Temperaturen oberhalb von 150°C in Gegenwart von sauren Katalysatoren mit Ausnahme von Chlorwasserstoff und Kohlendioxid, dadurch gekennzeichnet, daß man die sauren Katalysatoren erst in der Reaktionszone, in der die Polykondensation abläuft, mit der feinteiligen Asparaginsäure in Kontakt bringt.

2. Verfahren nach Anspruch 1, dadurch gekennzeichnet, daß man feinteilige Asparaginsäure, die auf eine Temperatur von 160 bis 200°C erhitzt ist, im Gewichtsverhältnis Asparaginsäure zu Katalysator von 1:0,02 bis 1:0,25 miteinander in Kontakt bringt.

3. Verfahren nach Anspruch 1 oder 2, dadurch gekennzeichnet, daß man die als Katalysator wirkenden Säuren auf feinteilige Asparaginsäure aufsprüht.

4. Verfahren nach Anspruch 3, dadurch gekennzeichnet, daß man die sauren Katalysatoren in einem solchen Maße auf die Oberfläche der feinteiligen Asparaginsäure aufsprüht, daß darauf keine klebrigen Lösungen entstehen.

5. Verfahren nach Anspruch 1 oder 2, dadurch gekennzeichnet, daß man die sauren Katalysatoren höchstens in einer solchen Menge auf die Oberfläche der feinteiligen Asparaginsäure aufbringt, daß die Menge an zugeführten sauren Katalysatoren der Menge an sauren Katalysatoren entspricht, die in die feinteilige Asparaginsäure diffundiert.

6. Verfahren nach Anspruch 1, dadurch gekennzeichnet, daß man pulverförmige Asparaginsäure in einer Wirbelschicht auf eine Temperatur von mindestens 150°C, vorzugsweise 160 bis 200°C erhitzt.

7. Verfahren nach Anspruch 1, dadurch gekennzeichnet, daß man als Katalysator Phosphorsäure, phosphorige Säure, unterphosphorige Säure, Ammoniumhydrogensulfat, Natriumhydrogensulfat, Kaliumhydrogensulfat, Mischungen von Natrium- und Kaliumhydrogensulfat, Mischungen aus Ammonium-, Natrium- und Kaliumhydrogensulfat, Trimethylammoniumhydrogensulfat, Triethylammoniumhydrogensulfat und Mischungen der genannten Hydrogensulfate sowie Schwefelsäure einsetzt.

## Claims

1. A process for preparing polyaspartic acid by polycondensation of fine-particle aspartic acid which has an average particle diameter of from 5 µm to 5 mm at temperatures above 150°C in the presence of acidic catalysts, with the exception of hydrogen chloride and carbon dioxide, wherein first contact between the acidic catalysts and the fine-particle aspartic acid takes place in the reaction zone where the polycondensation takes place.

2. A process as claimed in claim 1, wherein fine-particle aspartic acid which has been heated to 160-200°C is brought into contact with catalyst in the ratio of aspartic acid to catalyst of from 1:0.02 to 1:0.25 by weight.

3. A process as claimed in claim 1 or 2, wherein the acids acting as catalyst are sprayed onto fine-particle aspartic acid.

4. A process as claimed in claim 3, wherein the acidic catalysts are sprayed onto the surface of the fine-particle aspartic acid in amounts such that no sticky solutions are then produced.

5. A process as claimed in claim 1 or 2, wherein the maximum amount of acidic catalysts applied to the surface of the fine-particle aspartic acid is such that the amount of added acidic catalysts corresponds to the amount of acidic catalysts which diffuses into the fine-particle aspartic acid.

6. A process as claimed in claim 1, wherein powdered aspartic acid is heated in a fluidized bed to at least 150, preferably 160-200, °C.

7. A process as claimed in claim 1, wherein phosphoric acid, phosphorous acid, hypophosphorous acid, ammonium bisulfate, sodium bisulfate, potassium bisulfate, mixtures of sodium and potassium bisulfates, mixtures of ammonium, sodium and potassium bisulfates, trimethylammonium bisulfate, triethylammonium bisulfate and mixtures of said bisulfates, and sulfuric acid, are used as catalyst.

## Revendications

1. Procédé de préparation d'acide polyaspartique par polycondensation d'acide aspartique finement divisé, ayant un diamètre de particules moyen de 5 µm à 5 mm, à des températures supérieures à 150°C, en présence de catalyseurs acides, à l'exception du chlorure d'hydrogène et du dioxyde de carbone, caractérisé en ce que l'on met d'abord les catalyseurs acides en contact avec l'acide aspartique finement divisé dans la zone réactionnelle dans laquelle a lieu la polycondensation.

2. Procédé selon la revendication 1, caractérisé en ce que l'on met en contact l'acide aspartique finement divisé et porté à une température de 160-200°C, avec le catalyseur, dans un rapport en poids acide aspartique/catalyseur de 1 : 0,02 à 1 : 0,25.

3. Procédé selon la revendication 1 ou 2, caractérisé en ce que l'on pulvérise les acides agissant comme catalyseur, sur l'acide aspartique finement divisé.

4. Procédé selon la revendication 3, caractérisé en ce que l'on pulvérise les acides agissant comme catalyseur sur la surface de l'acide aspartique finement divisé, de telle sorte qu'il ne se forme en aucune solution adhésive par dessus.

5. Procédé selon la revendication 1 ou 2, caractérisé en ce que l'on dépose, au maximum, les catalyseurs acides sur la surface de l'acide aspartique finement divisé en une quantité telle que la quantité de catalyseur acide ajouté correspond à la quantité de catalyseur acide qui diffuse dans l'acide aspartique finement divisé.

6. Procédé selon la revendication 1, caractérisé en ce que l'on chauffe l'acide aspartique sous forme de poudre dans un lit fluidisé à une température d'au moins 150°C, de préférence 160-200°C.

7. Procédé selon la revendication 1, caractérisé en ce que l'on utilise en tant que catalyseur, de l'acide phosphorique, de l'acide phosphoreux, de l'acide hypophosphoreux, de l'hydrogénosulfate d'ammonium, de l'hydrogénosulfate de sodium, de l'hydrogénosulfate de potassium, des mélanges d'hydrogénosulfate de sodium et de potassium, des mélanges d'hydrogénosulfate d'ammonium, de sodium et de potassium, de l'hydrogénosulfate de triméthylammonium, de l'hydrogénosulfate de triéthylammonium et des mélanges des hydrogénosulfates cités ainsi que l'acide sulfurique.
